# FASCICULE DE BREVET EUROPEEN

(11) **EP 3 495 640 B1**
(45) Date de publication et mention de la délivrance du brevet: **09.09.2020**
(21) Numéro de dépôt: 18210436.4
(22) Date de dépôt: 05.12.2018
(51) Int. Cl.: F02C 7/224, F02C 7/14

(54) **CIRCUIT DE COMMANDE HYDRAULIQUE ET PNEUMATIQUE POUR TURBORÉACTEUR À ÉCHANGEUR DE CHALEUR CARBURANT/AIR**
HYDRAULISCHER UND PNEUMATISCHER REGELKREIS FÜR TURBOREAKTOR MIT KRAFTSTOFF-/LUFT-WÄRMETAUSCHER
HYDRAULIC AND PNEUMATIC CONTROL CIRCUIT FOR TURBOJET WITH FUEL/AIR HEAT EXCHANGER

(30) Priorité: 06.12.2017 FR 1761699
(43) Date de publication de la demande: 12.06.2019
(73) Titulaire: SAFRAN AIRCRAFT ENGINES, 75015 Paris (FR)
(72) Inventeur: ANGEVIN, Thomas Roger Jacques, 77550 Moissy-Cramayel (FR); BAUDRAN, Arnaud, 77550 Moissy-Cramayel (FR)
(74) Mandataire: Cabinet Beau de Loménie

(56) Documents cités:
- WO-A2-2015/080778
- FR-A1- 2 478 742
- US-B2- 8 534 044
- US-B2- 9 702 301

## Description

### Arrière-plan de l'invention

La présente invention se rapporte au domaine général de la circulation de carburant, d'huile et d'air au sein d'un turboréacteur.

Dans un turboréacteur, il est courant que le carburant soit utilisé non seulement comme combustible (dans la chambre de combustion du turboréacteur), mais également comme fluide hydraulique dans des actionneurs hydrauliques pour la commande d'équipements à géométrie variable du turboréacteur (tels que notamment les vannes de décharge d'air et les vannes permettant d'adapter la géométrie du compresseur du turboréacteur).

A cet effet, le circuit de carburant d'un turboréacteur comporte typiquement une pompe volumétrique pour alimenter deux lignes distinctes de carburant : une première ligne hydraulique pour l'alimentation des systèmes d'injection de carburant dans la chambre de combustion, et une seconde ligne hydraulique pour l'alimentation de vérins hydrauliques pour la commande des équipements à géométrie variable du turboréacteur.

La seconde ligne hydraulique destinée à l'alimentation des vérins de commande des équipements à géométrie variable du turboréacteur comporte des servovalves électrohydrauliques, c'est-à-dire des vannes hydrauliques commandées par des servomoteurs. Ces servovalves permettent de délivrer un débit calibré de carburant vers l'une ou l'autre des chambres d'un vérin hydraulique et sont commandées électriquement par le calculateur électronique du turboréacteur (également appelé ECU pour « Electronic Control Unit »).

Ces servovalves électrohydrauliques ne supportent pas le givre qui a tendance à se créer à des températures négatives à partir de l'eau contenue dans le carburant. Pour éviter la formation de givre, le circuit de carburant utilise un échangeur de chaleur pour réchauffer le carburant circulant dans la seconde ligne hydraulique grâce à l'huile chaude s'écoulant dans un circuit de lubrification du turboréacteur. Cet échangeur de chaleur correspond typiquement à la fonction SFH (pour « Servo Fuel Heater ») d'un échangeur de chaleur huile/carburant appelé échangeur FCOC (pour « Fuel Cooled Oil Cooler »).

L'échangeur FCOC comprend également une fonction principale de transfert de chaleur destinée à assurer, d'une part un refroidissement de l'huile du circuit de lubrification du turboréacteur dans les conditions chaudes, et d'autre part un réchauffement du carburant dans les conditions froides. Cette fonction principale, appelée fonction MHX pour « Main Heat Exchanger », agit sur le carburant en amont de la pompe volumétrique du circuit de carburant.

Par ailleurs, un turboréacteur comprend un circuit d'huile qui a pour fonction principale le refroidissement et la lubrification d'éléments du turboréacteur. A cet effet, le circuit d'huile utilise deux sources froides : le carburant (au moyen de l'échangeur FCOC précédemment décrit) et l'air (au moyen d'un échangeur de chaleur huile/air appelé échangeur ACOC pour « Air Cooled Oil Cooler »). Cette architecture de circuit d'huile présente toutefois l'inconvénient que le débit d'huile qui est brassé par la pompe d'alimentation de ce circuit d'huile passe intégralement par les échangeurs FCOC et ACOC, ce qui occasionne des pertes de charge.

Enfin, le turboréacteur comprend encore un circuit d'air qui permet d'assurer l'alimentation en air d'un organe de commande pneumatique de vannes de décharge du compresseur haute-pression du turboréacteur et d'une vanne de contrôle de jeu en sommet d'aubes de la turbine haute-pression du turboréacteur. Typiquement, cet organe de commande pneumatique (appelé PCU pour « Pneumatic Control Unit ») est commandé électriquement par le calculateur électronique du turboréacteur et renferme des électrorobinets actionnant les vannes précitées en fonctionnement du type tout ou rien.

Le PCU est alimenté en air prélevé au niveau du compresseur haute-pression du turboréacteur. Compte-tenu des températures élevées de l'air (jusqu'à 650°C dans les cas les plus chauds), il est nécessaire de refroidir cet air avant qu'il alimente les électrorobinets du PCU. A cet effet, il est connu de munir le circuit d'air d'un échangeur de chaleur air/air qui est typiquement un échangeur surfacique transférant les calories de l'air chaud prélevé au niveau du compresseur haute-pression du turboréacteur à de l'air plus froid circulant dans la veine secondaire du turboréacteur. Cet échangeur de chaleur air/air est appelé échangeur SACAC pour « Surface Air Cooled Air Cooler ». Il présente néanmoins comme inconvénient d'utiliser le flux secondaire du turboréacteur comme source froide, ce qui génère des pertes de charge et dégradent les performances du moteur (évaluée à 0,03% de la consommation spécifique de carburant).

Les rejets thermiques des nouveaux turboréacteurs étant de plus en plus importants, il devient nécessaire d'optimiser au maximum la gestion des calories du carburant, de l'huile et de l'air circulant dans le moteur afin de favoriser le refroidissement de l'huile et la consommation spécifique de carburant.

Un circuit de commande hydraulique et pneumatique pour turboréacteur selon l'art antérieur est divulgué dans les documents US8534044, WO2015080778 et US9702301.

### Objet et résumé de l'invention

La présente invention a donc pour but principal de proposer une gestion optimisée des calories du carburant, de l'huile et de l'air circulant dans un turboréacteur.

Ce but est atteint grâce à un circuit de commande hydraulique et pneumatique pour turboréacteur tel que défini dans la revendication 1.

Dans la présente invention, on appelle circuit de commande hydraulique et pneumatique l'association d'un circuit de commande hydraulique et d'un circuit de commande pneumatique. Le circuit de commande hydraulique et pneumatique est remarquable notamment en ce qu'il prévoit un échangeur de chaleur carburant/air qui assure les fonctions à la fois de refroidissement de l'air destiné à alimenter l'organe de commande pneumatique et de réchauffement du carburant dans la seconde ligne hydraulique en amont des servovalves électrohydrauliques. Ainsi, l'invention permet de supprimer la fonction SFH de l'échangeur FCOC, cette fonction de réchauffement du carburant circulant dans la seconde ligne hydraulique étant réalisée grâce à l'échangeur de chaleur carburant/air. Cette suppression de la fonction SFH permet ainsi de libérer de la marge en termes de pertes de charge dans le circuit d'huile du moteur et de diminuer l'encombrement dans le moteur. Les capacités d'échanges thermiques sur les autres échangeurs de chaleur du circuit d'huile peuvent ainsi être augmentées.

De préférence, la ligne pneumatique comprend en outre, en aval de l'échangeur de chaleur carburant/air, un organe de dépressurisation d'enceintes moteur pour régler le débit d'air traversant l'échangeur de chaleur carburant/air. Cet organe de dépressurisation peut comprendre une trompe à jet, cette dernière utilisant un débit permanent pour dépressuriser les enceintes moteur, ce qui permet de facilement dimensionner l'échangeur de chaleur carburant/air.

La première et seconde lignes hydrauliques sont reliées l'une à l'autre en amont de la chambre de combustion et des vérins hydrauliques, pour former la ligne hydraulique principale. La ligne hydraulique principale peut comprendre une pompe volumétrique.

Dans ce cas, la ligne hydraulique principale peut comprendre en outre une pompe basse-pression positionnée en amont de l'échangeur de chaleur huile/carburant et en aval d'un réservoir de carburant.

De plus, l'air circulant dans la ligne pneumatique provient d'un prélèvement sur le compresseur du turboréacteur.

L'invention a également pour objet un turboréacteur comprenant un circuit de commande hydraulique et pneumatique tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'un circuit de commande hydraulique selon l'invention ; et
- la figure 2 est une vue schématique d'un circuit de commande pneumatique selon l'invention.

### Description détaillée de l'invention

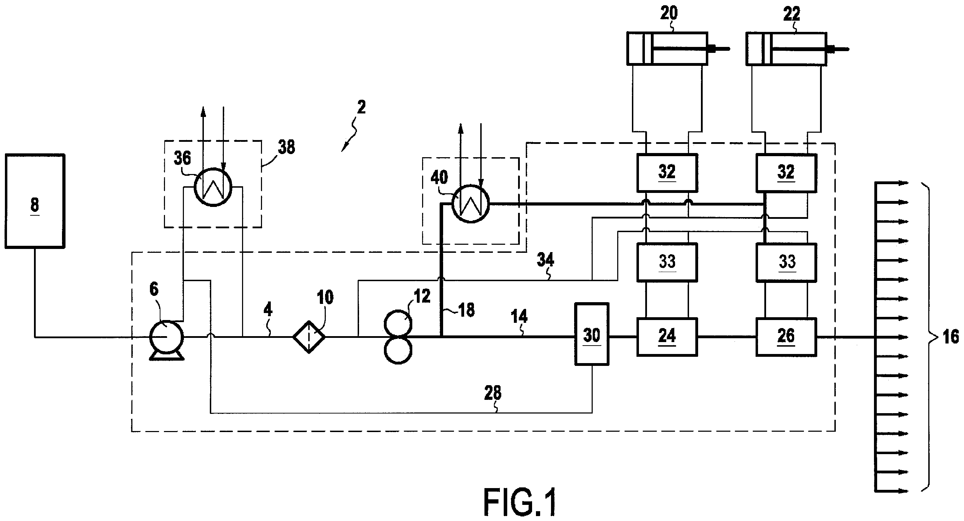

En liaison avec la figure 1, on décrira le circuit de commande hydraulique d'un turboréacteur selon l'invention.

Le circuit de commande hydraulique 2 comporte une ligne hydraulique principale 4. Cette dernière est munie, d'amont en aval dans le sens d'écoulement du carburant, d'une pompe basse-pression 6 reliée en amont à un réservoir de carburant 8, d'un filtre principal à carburant 10 et d'une pompe volumétrique haute-pression 12.

En aval de la pompe haute-pression 12, la ligne hydraulique principale se divise en deux lignes distinctes de carburant, à savoir : une première ligne hydraulique 14 pour l'alimentation en carburant de systèmes d'injection de carburant 16 d'une chambre de combustion du turboréacteur ; et une seconde ligne hydraulique 18 pour l'alimentation en carburant d'un ou plusieurs actionneurs hydrauliques 20, 22 pour la commande d'équipements à géométrie variable du turboréacteur.

Plus précisément, la première ligne hydraulique 14 comprend un organe doseur 24 (appelée FMV pour « Fuel Metering Valve ») permettant de contrôler le débit de carburant injecté dans la chambre de combustion de la turbomachine via les systèmes d'injection de carburant 16, et une vanne de coupure haute-pression 26 (appelée HPSOV pour « High Pressure Shut-Off Valve ») permettant de couper le débit de carburant en cas de survitesse de la turbomachine. Chaque organe 24 ou 26 est actionné par une servovalve électrohydraulique 33 dédiée (appelée EHSV pour « Electro Hydraulic Servo Valves »).

Le carburant en excès dans cette première ligne hydraulique est renvoyé en amont du filtre principal à carburant 10 via une boucle de recirculation 28 alimentée par une vanne de contournement 30.

Quant à la seconde ligne hydraulique 18, elle comprend en outre des servovalves électrohydrauliques 32, chaque servovalve étant utilisée pour délivrer un débit de carburant vers l'une ou l'autre des chambres d'un vérin hydraulique 20, 22.

Ces servovalves 32 sont commandées électriquement par le calculateur électronique du turboréacteur (ou ECU pour « Electronic Control Unit » désignant une unité de commande électronique). Un tel calculateur est bien connu en soi : il permet de commander un certain nombre d'équipements associés à la turbomachine. Le carburant sortant des servovalves 32 rejoint la ligne hydraulique principale 4 entre le filtre principal à carburant 10 et la pompe haute-pression 12 par l'intermédiaire d'une boucle de recirculation 34.

Le circuit de commande hydraulique 2 comporte en outre un échangeur de chaleur huile/carburant 36 - appelé échangeur FCOC (pour « Fuel Cooled Oil Cooler ») - qui est muni d'une fonction principale de transfert de chaleur destinée à assurer, d'une part un refroidissement de l'huile du circuit d'huile du turboréacteur dans les conditions chaudes, et d'autre part un réchauffement du carburant dans les conditions froides.

Cette fonction principale de transfert de chaleur est mise en œuvre par un échangeur thermique carburant/huile 38 intercalé sur la ligne hydraulique principale 4 entre la pompe basse-pression 6 et le filtre principal à carburant 10 afin de refroidir l'huile de lubrification du turboréacteur par échange thermique avec du carburant au travers d'une surface d'échange séparant ces deux fluides, ce qui a pour conséquence de chauffer le carburant et de refroidir l'huile.

On notera que selon l'invention, l'échangeur de chaleur huile/carburant 36 est dépourvu de fonction SFH destinée à réchauffer le carburant circulant dans la seconde ligne hydraulique 18 grâce à l'huile chaude s'écoulant dans le circuit d'huile du turboréacteur (non représenté sur les figures).

A la place, le circuit de commande hydraulique 2 selon l'invention comprend un échangeur de chaleur carburant/air 40 qui est positionné sur la seconde ligne hydraulique 18 en amont des servovalves électrohydrauliques 32 pour assurer un transfert de calories depuis l'air circulant dans la ligne pneumatique (décrite ultérieurement) vers le carburant circulant dans la seconde ligne hydraulique.

Cet échangeur de chaleur carburant/air 40 est un réchauffeur/refroidisseur qui transfère les calories de sa source chaude (en l'espèce l'air alimentant l'organe de commande pneumatique) à sa source froide (en l'espèce le carburant alimentant les servovalves électrohydrauliques). Il est dénommé échangeur FCAC pour « Fuel Cooled Air Cooler ».

A titre d'exemple, cet échangeur de chaleur carburant/air 40 présente une partie alimentée par le carburant et l'autre par de l'air. La méthode de transfert thermique entre l'air et le carburant peut être via une architecture type « à plaque » ou bien « à tube », ces deux architectures sont bien connues et dépendent des caractéristiques des circuits en termes de débits et de température.

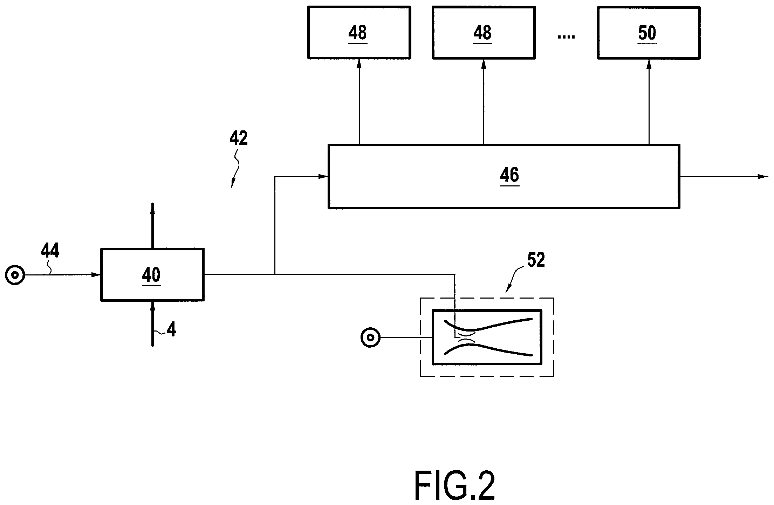

En liaison avec la figure 2, on décrira maintenant le circuit de commande pneumatique 42 du turboréacteur selon l'invention. On appelle circuit de commande hydraulique et pneumatique l'association du circuit de commande hydraulique 2 et du circuit de commande pneumatique 42.

Ce circuit de commande pneumatique 42 comprend notamment une ligne pneumatique 44 pour l'alimentation en air d'un organe de commande pneumatique 46, cet organe étant destiné à commander une pluralité de vannes de décharge 48 d'un compresseur du turboréacteur et une vanne 50 de contrôle de jeu en sommet d'aubes d'une turbine du turboréacteur.

De façon plus précise, l'air circulant dans la ligne pneumatique 44 provient d'un prélèvement effectué sur un étage du compresseur haute-pression du turboréacteur.

De plus, l'organe de commande pneumatique 46 est commandé électriquement par le calculateur électronique du turboréacteur et renferme une pluralité d'électrorobinets (non représentés) alimentant chacun une vanne 48, 50, ces dernières ayant un fonctionnement de type tout ou rien.

Selon l'invention, l'échangeur de chaleur carburant/air 40 précédemment décrit est également positionné sur la ligne pneumatique 44 en amont de l'organe de commande pneumatique 46. Ainsi, cet échangeur de chaleur carburant/air 40 permet de refroidir l'air provenant du prélèvement sur le compresseur haute-pression du turboréacteur avant qu'il n'alimente l'organe de commande pneumatique 46, tout en réchauffant le carburant circulant dans la seconde ligne hydraulique du circuit hydraulique avant qu'il n'alimente les servovalves électrohydrauliques.

De préférence, la ligne pneumatique 44 du circuit pneumatique comprend en outre, en aval de l'échangeur de chaleur carburant/air 40, un organe de dépressurisation d'enceintes moteur 52 pour régler le débit d'air traversant l'échangeur de chaleur carburant/air.

Typiquement, cet organe de dépressurisation 52 comprend une trompe à jet utilisant un débit permanent pour dépressuriser les enceintes moteur, ce qui permet de facilement dimensionner l'échangeur de chaleur carburant/air.

Le circuit d'huile du turboréacteur n'est pas décrit ici. Typiquement, un tel circuit d'huile a pour fonction principale le refroidissement et la lubrification d'éléments du turboréacteur. Dans la mise en œuvre de l'invention, le circuit d'huile se distingue de l'art antérieur en ce que l'échangeur de chaleur huile/carburant est dépourvu de fonction SFH destinée à réchauffer le carburant circulant dans la seconde ligne hydraulique grâce à l'huile chaude s'écoulant dans le circuit d'huile.

## Revendications

1. Circuit de commande hydraulique et pneumatique pour turboréacteur, comprenant :
une ligne hydraulique principale (4) comprenant un échangeur de chaleur huile/carburant (36) ayant une fonction de transfert de calories (38) depuis l'huile s'écoulant dans un circuit d'huile du turboréacteur vers le carburant circulant dans la ligne hydraulique principale ;
une première ligne hydraulique (14) d'alimentation en carburant d'une chambre de combustion du turboréacteur ;
une seconde ligne hydraulique (18) d'alimentation en carburant d'un ou plusieurs actionneurs hydrauliques (20, 22) assurant la commande d'équipements à géométrie variable du turboréacteur, chaque actionneur hydraulique étant alimenté en carburant par l'intermédiaire d'une servovalve électrohydraulique (32), les première et seconde lignes hydrauliques (14, 18) étant reliées l'une à l'autre, en amont de la chambre de combustion et des actionneurs hydrauliques, pour former la ligne hydraulique principale (4) ; et
une ligne pneumatique (44) d'alimentation en air d'un organe de commande pneumatique (46) de vannes de décharge (48) d'un compresseur du turboréacteur et d'une vanne de contrôle de jeu (50) en sommet d'aubes d'une turbine du turboréacteur ;
**caractérisé en ce que**, pour réchauffer le carburant circulant dans la seconde ligne hydraulique sans recourir à l'échangeur de chaleur huile/carburant de la ligne principale, il comprend en outre un échangeur de chaleur carburant/air (40) positionné sur la seconde ligne hydraulique en amont des servovalves électrohydrauliques et sur la ligne pneumatique en amont de l'organe de commande pneumatique pour assurer un transfert de calories depuis l'air circulant dans la ligne pneumatique vers le carburant circulant dans la seconde ligne hydraulique.

2. Circuit selon la revendication 1, dans lequel la ligne pneumatique (44) comprend en outre, en aval de l'échangeur de chaleur carburant/air (40), un organe de dépressurisation d'enceintes moteur (52) permettant de régler le débit d'air traversant l'échangeur de chaleur carburant/air.

3. Circuit selon la revendication 2, dans lequel l'organe de dépressurisation (52) comprend une trompe à jet.

4. Circuit selon l'une quelconque des revendications 1 à 3, dans lequel la ligne hydraulique principale (4) comprend en outre une pompe volumétrique (12).

5. Circuit selon la revendication 1, dans lequel la ligne hydraulique principale (4) comprend en outre une pompe basse-pression (6) positionnée en amont de l'échangeur de chaleur huile/carburant (36) et en aval d'un réservoir de carburant (8).

6. Circuit selon l'une quelconque des revendications 1 à 5, dans lequel l'air circulant dans la ligne pneumatique (44) provient d'un prélèvement sur le compresseur du turboréacteur.

7. Turboréacteur comprenant un circuit de commande hydraulique et pneumatique selon l'une quelconque des revendications 1 à 6.

## Patentansprüche

1. Hydraulischer und pneumatischer Steuerkreis für ein Turbostrahltriebwerk, umfassend:
eine Haupthydraulikleitung (4), die einen Öl/Treibstoff-Wärmetauscher (36) umfasst, welcher eine Funktion des Wärmeübergangs (38) von dem in einem Ölkreislauf des Turbostrahltriebwerks fließenden Öl auf den in der Haupthydraulikleitung fließenden Kraftstoff aufweist,
eine erste Hydraulikleitung (14) zur Treibstoffversorgung einer Brennkammer des Turbostrahltriebwerks,
eine zweite Hydraulikleitung (18) zur Treibstoffversorgung von einem oder mehreren Hydraulikaktoren (20, 22), welche die Steuerung von Einrichtungen mit variabler Geometrie des Turbostrahltriebwerks sicherstellen, wobei jeder Hydraulikaktor über ein elektrohydraulisches Servoventil (32) mit Treibstoff versorgt wird, wobei die erste und die zweite Hydraulikleitung (14, 18) vor der Brennkammer und den Hydraulikaktoren miteinander verbunden sind, um die Haupthydraulikleitung (4) zu bilden, und
eine Pneumatikleitung (44) zur Luftversorgung eines pneumatischen Organs zum Steuern (46) von Entlastungsventilen (48) eines Kompressors des Turbostrahltriebwerks und eines Spielsteuerventils (50) an der Spitze von Schaufeln einer Turbine des Turbostrahltriebwerks,
**dadurch gekennzeichnet, dass** er zum Erhitzen des in der zweiten Hydraulikleitung fließenden Treibstoffs ohne Verwendung des Öl/Treibstoff-Wärmetauschers der Hauptleitung ferner einen Treibstoff/Luft-Wärmetauscher (40) umfasst, der an der zweiten Hydraulikleitung vor den elektrohydraulischen Servoventilen und an der Pneumatikleitung vor dem pneumatischen Steuerorgan angeordnet ist, um einen Wärmeübergang von der in der Pneumatikleitung strömenden Luft auf den in der zweiten Hydraulikleitung fließenden Treibstoff sicherzustellen.

2. Kreis nach Anspruch 1, bei dem die Pneumatikleitung (44) ferner dem Treibstoff/Luft-Wärmetauscher (40) nachgeschaltet ein Organ zur Druckentlastung von Triebwerksräumen (52) umfasst, das ermöglicht, die den Treibstoff/Luft-Wärmetauscher durchströmende Luftmenge einzustellen.

3. Kreis nach Anspruch 2, bei dem das Druckentlastungsorgan (52) eine Strahlpumpe umfasst.

4. Kreis nach einem der Ansprüche 1 bis 3, bei dem die Haupthydraulikleitung (4) ferner eine Verdrängerpumpe (12) umfasst.

5. Kreis nach Anspruch 1, bei dem die Haupthydraulikleitung (4) ferner eine Niederdruckpumpe (6) umfasst, die dem Öl/Treibstoff-Wärmetauscher (36) vorgeschaltet und einem Treibstofftank (8) nachgeschaltet ist.

6. Kreis nach einem der Ansprüche 1 bis 5, bei dem die in der Pneumatikleitung (44) strömende Luft von einer Entnahme an dem Kompressor des Turbostrahltriebwerks stammt.

7. Turbostrahltriebwerk, das einen hydraulischen und pneumatischen Steuerkreis nach einem der Ansprüche 1 bis 6 umfasst.

## Claims

1. A hydraulic and pneumatic control circuit for a turbojet, the circuit comprising:
- a main hydraulic line (4) having an oil/fuel heat exchanger (36) with a function of transferring heat (38) from the oil flowing in an oil circuit of the turbojet to the fuel flowing in the main hydraulic line;
- a first hydraulic line (14) for feeding fuel to a combustion chamber of the turbojet;
- a second hydraulic line (18) for feeding fuel to one or more hydraulic actuators (20, 22) serving to control variable geometry equipment of the turbojet, each hydraulic actuator being fed with fuel via an electrohydraulic servovalve (32), the first and second hydraulic lines (14, 18) being connected to each other upstream from the combustion chamber and the hydraulic actuators in order to form the main hydraulic line (4); and
- a pneumatic line (44) for feeding air to a pneumatic control member (46) for bleed valves (48) of a compressor of the turbojet and a blade tip clearance control valve (50) of a turbine of the turbojet;
**characterized in that** for heating the fuel flowing in the second hydraulic line without needing the oil/fuel heat exchanger of the main line, the circuit further comprises a fuel/air heat exchanger (40) positioned on the second hydraulic line upstream from the hydraulic servovalve and on the pneumatic line upstream from the pneumatic control member in order to transfer heat from the air flowing in the pneumatic line to the fuel flowing in the second hydraulic line.

2. A circuit according to claim 1, wherein the pneumatic line (44) further comprises, downstream from the fuel/air heat exchanger (40), a member (52) for reducing the pressure of engine enclosures for the purpose of adjusting the flow rate of air passing through the fuel/air heat exchanger.

3. A circuit according to claim 2, wherein the member (52) for reducing pressure comprises a jet pump.

4. A circuit according to any one of claims 1 to 3, wherein the main hydraulic line (4) also includes a positive displacement pump (12).

5. A circuit according to claim 1, wherein the main hydraulic line (4) further comprises a low-pressure pump (6) positioned upstream from the oil/fuel heat exchanger (36) and downstream from a fuel tank (8).

6. A circuit according to any one of claims 1 to 5, wherein the air flowing in the pneumatic line (44) is bled from the compressor of the turbojet.

7. A turbojet including a hydraulic and pneumatic control circuit according to any one of claims 1 to 6.
